# EUROPÄISCHE PATENTANMELDUNG

(11) **EP 3 473 407 A1**
(43) Veröffentlichungstag der Anmeldung: **24.04.2019**
(21) Anmeldenummer: 17196728.4
(22) Anmeldetag: 17.10.2017
(51) Int. Cl.: B29C 51/42, B29C 51/10, B65B 7/16, B65B 31/02, B65B 9/04

(54) **FORMSTATION MIT HEIZEINRICHTUNG UND ENTSPRECHENDES VERFAHREN**

(71) Anmelder: MULTIVAC Sepp Haggenmüller SE & Co. KG, 87787 Wolfertschwenden (DE)
(72) Erfinder: FERK, Florian, 87730 Bad Grönenbach (DE)
(74) Vertreter: Grünecker Patent- und Rechtsanwälte PartG mbB

(57) **Zusammenfassung**

Die Erfindung betrifft eine Formstation (1) zum Formen einer Mulde in einer Folie (7), welche ein Formwerkzeugunterteil (3) mit einem Stempel (9) und ein Formwerkzeugoberteil (5) mit einem Formraum (13) umfasst, die die Folie (7) zwischen sich aufnehmen. Das Formwerkzeugunterteil (3) umfasst eine Stempel-Antriebseinrichtung (11) zum Verfahren des Stempels (9) während eines Formvorgangs durch eine Öffnung (15) des Formraums (13) in den Formraum (13) des Formwerkzeugoberteils (5) bis in eine Formposition als Endposition. Das Formwerkzeugoberteil (5) umfasst eine in dem Formraum (13) vorgesehene Heizeinrichtung (25) zum Beheizen der Folie (7). Das Formwerkzeugoberteil (5) umfasst zudem eine Heizeinrichtungs-Antriebseinrichtung (27) zum Verfahren der Heizeinrichtung (25) in dem Formraum (13) zwischen einer Heizposition, in der die Heizeinrichtung (25) einem Verfahren des Stempels (9) in die Formposition entgegensteht, und einer Verstauposition, in der die Heizeinrichtung (25) den Formraum (13) für das Verfahren des Stempels (9) in die Formposition freigibt.

## Beschreibung

Die vorliegende Erfindung betrifft das Gebiet des Formens von Mulden in einer Folie, insbesondere zum Herstellen von Verpackungen.

Aus der DE 10 2012 018 974 A1 ist eine Tiefziehverpackungsmaschine bekannt, bei der mittels einer Vorschubeinrichtung eine Folienbahn von einer Zufuhrrolle entlang einer Transportrichtung gefördert wird und so in der angegebenen Reihenfolge einer Vorheizstation, einer Formstation, einer Einlegestrecke, einer Siegelstation und einer Schneidstation zugeführt wird. Nachdem die Folie in der Vorheizstation auf eine Verformungstemperatur erwärmt wurde, werden in der Formstation durch Tiefziehen Formmulden in die Folienbahn eingebracht. Die Formstation umfasst ein Formwerkzeugoberteil mit einem Formstempel sowie ein Formwerkzeugunterteil mit einem Formraum. Die vorgeheizte Folie wird zwischen das Formwerkzeugunterteil und das Formwerkzeugoberteil geklemmt. Anschließend wird in dem Formraum des Formwerkzeugunterteils ein Vakuum angelegt, um die Folie gleichmäßig nach unten vorzuformen. In einer nachfolgenden Phase wird der Formstempel nach unten bis in eine in dem Formraum des Formwerkezugunterteils gelegene Endposition bewegt, wobei die Folie vor allem im Randbereich des Formstempels erfasst wird. In der Endposition wird der Formstempel arretiert. Anschließend wird ein in dem Formwerkzeugunterteil vorgesehener Formboden nach oben auf den Formstempel zubewegt und drückt in seiner Endposition die Folie gegen den Formstempel. Dabei wird die Folie entlang einer umlaufenden, geschlossenen Dichtung geklemmt, sodass durch ein Klischee des Formbodens ein innerer Formraum und um den Formstempel herum ein äußerer Formraum gebildet wird. In einer letzten Phase des Formprozesses wird der innere Formraum dann über eine Leitung im Formstempel mittels Druckluft beaufschlagt, um die Folie gegen das Klischee des Formbodens zu drücken. Der äußere Formraum wird mittels Druckluft über das Formwerkzeugunterteil beaufschlagt, um das Formen der Folie an dem Formstempel zu unterstützen, sodass die Formmulden die gewünschte Form erhalten. Die so hergestellten Formmulden werden dann in der Einlegestrecke mit zu verpackenden Produkten befüllt. In der Siegelstation werden die befüllten Verpackungsmulden durch Ansiegeln einer Deckelfolie verschlossen. In der Schneidstation werden die Verpackungen schließlich vereinzelt. Nachteilig an diesem System ist der hohe Platzbedarf, insbesondere für die zum Herstellen der Formmulden vorgesehenen Maschinenelemente.

Es ist Aufgabe der Erfindung, einen Weg zum Formen einer Mulde in einer Folie anzugeben, welcher in Bezug auf den Platzbedarf der benötigten Maschinenelemente verbessert ist.

Diese Aufgabe wird durch eine Formstation gemäß Anspruch 1 bzw. durch ein Verfahren zum Formen einer Mulde gemäß Anspruch 10 gelöst. Die abhängigen Ansprüche geben vorteilhafte Ausführungsformen der Erfindung an.

Eine erfindungsgemäße Formstation zum Formen einer Mulde in einer Folie insbesondere für eine Verpackungsmaschine umfasst ein Formwerkzeugunterteil mit einem Stempel und ein Formwerkzeugoberteil mit einem Formraum. Das Formwerkzeugunterteil und das Formwerkzeugoberteil sind dazu ausgelegt, die Folie zwischen sich aufzunehmen. Insbesondere können das Formwerkzeugunterteil und das Formwerkzeugoberteil die Folie klemmend zwischen sich aufnehmen. Das Formwerkzeugunterteil umfasst eine Stempel-Antriebseinrichtung, welche dazu ausgelegt ist, den Stempel während eines Formvorgangs durch eine Öffnung des Formraums in den Formraum des Formwerkzeugoberteils bis in eine Formposition als Endposition zu verfahren. Das Formwerkzeugoberteil umfasst eine in dem Formraum vorgesehene Heizeinrichtung zum Beheizen der Folie. Zudem umfasst das Formwerkzeugoberteil eine Heizeinrichtungs-Antriebseinrichtung, die dazu ausgelegt ist, die Heizeinrichtung in dem Formraum zwischen einer Heizposition und einer Verstauposition zu verfahren. In der Heizposition steht die Heizeinrichtung einem Verfahren des Stempels in die Formposition entgegen. Das heißt, dass die Heizeinrichtung in der Heizposition zumindest teilweise in einem Raum vorliegt, der in der Formposition des Stempels von dem Stempel eingenommen wird. Würde der Stempel in die Formposition hinein verfahren werden, wenn die Heizeinrichtung in der Heizposition ist, käme es zu einer Kollision des Stempels mit der Heizeinrichtung. In der Verstauposition dagegen gibt die Heizeinrichtung den Formraum für das Verfahren des Stempels in die Formposition frei. Das heißt, dass der Stempel in die Formposition verfahren werden kann, ohne mit der Heizeinrichtung zu kollidieren, wenn sich diese in der Verstauposition befindet.

Dadurch, dass die Heizeinrichtung zum Beheizen der Folie in dem Formraum des Formwerkzeugoberteils vorgesehen ist, kann die Folie vor der Verformung direkt in der Formstation auf eine gewünschte Verformungstemperatur gebracht werden. Auf das Vorsehen einer separaten, der Formstation vorgeordneten Vorheizstation kann verzichtet werden, sodass ein verringerter Platzbedarf besteht.

Durch die Verfahrbarkeit der Heizeinrichtung zwischen der Heizposition und der Verstauposition wird ein effizientes Beheizen der Folie bereits vor dem Beginn des eigentlichen Formvorgangs ermöglicht. Aufgrund ihrer Verfahrbarkeit kann die Heizeinrichtung in eine zum Beheizen der Folie besonders geeignete Heizposition gebracht werden, obwohl sie in dieser einem Verfahren des Stempels in die Formposition entgegensteht. Nach dem Beheizen der Folie kann die Heizeinrichtung in die Verstauposition gefahren werden und gibt so den Weg für den Stempel frei. Die verfahrbare Heizeinrichtung hat gegenüber beispielsweise einem Beheizen des Stempels selbst oder einem Beheizen von Innenwänden des Formraums den Vorteil, dass die Folie bereits vor dem Beginn der eigentlichen Verformung erwärmt werden kann, wodurch eine gleichmäßigere Verformung erreicht wird. Zudem kann durch die Heizeinrichtung ein gleichmäßiges und insbesondere großflächiges Beheizen der Folie ermöglicht werden, was beispielsweise bei einer Beheizung des Stempels je nach Stempelform nicht gegeben sein kann.

Der Einfachheit halber werden die beiden Formwerkzeugteile der Formstation als "Formwerkzeugunterteil" und "Formwerkzeugoberteil" bezeichnet. Bevorzugterweise ist die Formstation tatsächlich derart im Raum orientiert, dass das Formwerkzeugoberteil in vertikaler Richtung über dem Formwerkzeugunterteil liegt. Dies ist dies aber im Sinne der Erfindung nicht zwingend notwendig. Es versteht sich, dass die Formstation prinzipiell beliebig im Raum orientiert sein kann. Insbesondere kann die Formstation derart gekippt installiert werden, dass das Formwerkzeugoberteil und das Formwerkzeugunterteil entlang einer Richtung aufeinander folgend angeordnet sind, die unter einem Winkel zur Vertikalen steht. Im Speziellen wäre auch eine Anordnung denkbar, bei der das Formwerkzeugunterteil in vertikaler Richtung über dem Formwerkzeugoberteil liegt (um 180° gedrehte Installation).

Vorzugsweise liegt in der Heizposition eine Heizfläche der Heizeinrichtung zumindest im Wesentlichen auf Höhe der Öffnung des Formraums. Hierdurch wird erreicht, dass die Heizeinrichtung nahe an die zwischen dem Formwerkzeugunterteil und dem Formwerkzeugoberteil aufgenommene Folie herangeführt und so eine besonders gute Heizwirkung erzielt wird. Beispielsweise kann die Heizfläche der Heizeinrichtung in der Heizposition bis auf eine Höhendifferenz von weniger als 10 mm, weniger als 5 mm oder weniger als 2 mm auf der Höhe der Öffnung des Formraums liegen. Die Heizfläche der Heizeinrichtung kann in der Heizposition geringfügig gegenüber der Öffnung des Formraums nach innen in den Formraum hinein versetzt vorliegen, sodass kein physischer Kontakt zwischen Folie und Heizeinrichtung vorliegt. So kann die Folie besonders schonend beheizt werden. Es wäre aber auch denkbar, dass die Heizfläche der Heizeinrichtung in der Heizposition mit der Folie in Kontakt ist, um eine besonders gute Wärmeübertragung zu erreichen. Hierzu kann die Heizeinrichtung insbesondere leicht über die Öffnung des Formraums aus dem Formraum herausreichen.

Vorzugsweise umfasst die Formstation eine Steuereinrichtung, die dazu konfiguriert ist, bei einem Formvorgang die Heizeinrichtung durch Ansteuern der Heizeinrichtungs-Antriebseinrichtung zunächst zum Beheizen der Folie in die Heizstellung zu verfahren, nach dem Beheizen der Folie die Heizeinrichtung durch Ansteuern der Heizeinrichtungs-Antriebseinrichtung in die Verstauposition zu verfahren, und anschließend den Stempel durch Ansteuern der Stempel-Antriebseinrichtung in die Formposition zu verfahren. Durch eine solche Abfolge kann mit der in dem Formraum des Formwerkzeugoberteils vorgesehenen Heizeinrichtung derselbe Effekt erzielt werden wie durch eine der Formstation vorgeordnete separate Vorheizstation. Somit kann bei gleichem Ergebnis der benötigte Bauraum reduziert werden. Es ist durchaus denkbar, dass das Verfahren des Stempels in die Formposition bereits beginnt, bevor die Heizeinrichtung vollständig in die Verstauposition verfahren ist. Solange gewährleistet wird, dass der Stempel nicht mit der Heizeinrichtung kollidiert, können das Verfahren der Heizeinrichtung in die Verstauposition und das Verfahren des Stempels in die Formposition durchaus zumindest teilweise gleichzeitig erfolgen, um den Arbeitstakt der Formstation zu erhöhen.

Wenn sich der Stempel in der Formposition und die Heizeinrichtung in der Verstauposition befindet, sind der Stempel und die Heizeinrichtung vorzugsweise voneinander beabstandet. Hiermit ist nicht gemeint, dass die Heizeinrichtung und der Stempel lediglich durch die Folie beabstandet sind, die Folie also gewissermaßen zwischen Stempel und Heizeinrichtung eingeklemmt ist. Es soll vielmehr ein über die Dicke der Folie hinausgehender Spalt zwischen Stempel und Heizeinrichtung vorliegen. Hierdurch wird verhindert, dass durch lokales Erwärmen bestimmter Bereiche der Folie (entsprechend der Stempelform) durch die noch warme Heizeinrichtung lokale Inhomogenitäten in den Materialeigenschaften der hergestellten Mulden entstehen.

Die Heizvorrichtung kann als elektrisch beheizbare Heizplatte ausgebildet sein. So lässt sich eine besonders homogene Beheizung der Folie erreichen.

Vorzugsweise ist die Heizeinrichtungs-Antriebseinrichtung dazu konfiguriert, die Heizeinrichtung in einer insbesondere parallel zur Bewegungsrichtung des Stempels gerichteten Translationsbewegung zwischen der Heizposition und der Verstauposition zu verfahren. So ist es besonders einfach, die Heizeinrichtung in der Heizposition über einen großen Bereich der Öffnung des Formraums hinweg zu positionieren. Beim Verfahren der Heizeinrichtung in die Verstauposition wird diese einfach in einen von der Öffnung des Formraums in das Innere des Formraums hinein beabstandeten Rückraum des Formraums verfahren, wo sie die Bewegung des Stempels in die Formposition nicht stört. Es wäre aber auch denkbar, dass die Heizeinrichtungs-Antriebseinrichtung dazu konfiguriert ist, die Heizeinrichtung in einer Schwenkbewegung zwischen der Heizposition und der Verstauposition zu verfahren. Hierbei könnte es sich beispielsweise um ein Verschwenken um eine senkrecht zur Bewegungsrichtung des Stempels liegende Achse handeln. Insbesondere kann die Heizeinrichtung zum Verbringen in die Verstauposition in eine Lage geschwenkt werden, in der sie zumindest im Wesentlichen parallel zu einer Seitenwand des Formraums steht und bevorzugterweise an die Seitenwand angelegt ist. Bei einer solchen Ausgestaltung ist im Wesentlichen die gesamte Erstreckungslänge des Formraums in Bewegungsrichtung des Stempels für das Einfahren des Stempels nutzbar.

Es kann eine Druckanpassungsvorrichtung vorgesehen sein, die dazu ausgelegt ist, durch Absaugen von Gas aus dem Formraum einen Unterdruck in einem von der Folie begrenzten Bereich des Formraums zu erzeugen. Hierdurch kann die Folie in Richtung in den Formraum hinein angesaugt werden. Dies kann beispielsweise dazu verwendet werden, die Folie in Richtung auf die in der Heizposition befindliche Heizeinrichtung hin anzusaugen, um durch Kontakt zwischen der Folie und der Heizeinrichtung eine verbesserte Heizwirkung zu erreichen. Auch nach einem Verfahren der Heizeinrichtung in die Verstauposition kann ein Erzeugen eines Unterdrucks in dem von der Folie begrenzten Bereich des Formraums vorteilhaft sein, nämlich um die Folie durch ein Ansaugen in den Formraum hinein in eine gewölbte Formgebung vorzuformen.

Vorzugsweise ist die Formstation derart schließbar, dass bei geschlossener Formstation das Formwerkzeugunterteil und das Formwerkzeugoberteil zusammen mit der zwischen ihnen liegenden Folie einen luftdicht abgeschlossenen Innenraum definieren, der zumindest teilweise von dem Formraum des Formwerkzeugoberteils gebildet ist. Hierdurch wird es ermöglicht, den Formvorgang durch das Erzeugen bestimmter Druckverhältnisse in dem Innenraum zu unterstützen. Es kann eine Druckanpassungsvorrichtung vorgesehen sein, die dazu ausgelegt ist, bei geschlossener Formstation eine Druckdifferenz zwischen den beiden durch die Folie voneinander getrennten Teilräumen des Innenraums der Formstation geeignet anzupassen. Eine solche Druckanpassungsvorrichtung kann dazu ausgelegt sein, den von der Folie begrenzten Bereich des Formraums und/oder den gegen diesen durch die Folie abgegrenzten Teilraum des Innenraums der Formstation, welcher unter anderem einen Innenraum des Formwerkzeugunterteils umfasst, mit Unterdruck und/oder Überdruck zu beaufschlagen. Mit Hilfe einer solchen Anordnung kann die Folie beispielsweise in den Formraum hinein angesaugt werden, insbesondere während die Heizeinrichtung in der Heizposition befindlich ist bzw. vor einem Einfahren des Stempels in den Formraum. Zusätzlich oder alternativ kann durch Anlegen einer Druckdifferenz derart, dass der Druck in dem bezüglich der Folie auf Seiten des Formwerkzeugoberteils liegenden Teilraum des Innenraums der Formstation größer als in dem bezüglich der Folie auf Seiten des Formwerkzeugunterteils liegenden Teilraum des Innenraums der Formstation ist, ein Anlegen der Folie an den Stempel in der Formposition des Stempels gefördert werden, um eine besonders scharfe Formgebung zu erreichen.

Die Formstation kann Teil einer Verpackungsmaschine, insbesondere einer Lebensmittelverpackungsmaschine, sein. Außer der Formstation kann die Verpackungsmaschine beispielsweise noch eine Einlegestrecke zum Einlegen von zu verpackenden Produkten und eine Siegelstation zum Verschließen von befüllten Verpackungen umfassen.

Die Erfindung betrifft des Weiteren ein Verfahren zum Formen einer Mulde in einer Folie. Die erfindungsgemäße Formstation kann zum Durchführen des erfindungsgemäßen Verfahrens geeignet, ausgelegt und/oder konfiguriert sein. In Bezug auf die Formstation beschriebene Merkmale lassen sich auf das Verfahren übertragen und umgekehrt.

Bei dem erfindungsgemäßen Verfahren zum Formen einer Mulde in einer Folie wird die Folie zwischen ein Formwerkzeugunterteil und ein Formwerkzeugoberteil einer Formstation verbracht. Ein Stempel des Formwerkzeugunterteils wird durch eine Öffnung eines Formraums des Formwerkzeugoberteils in den Formraum hinein bis in eine Formposition als Endposition verfahren, insbesondere durch eine Stempel-Antriebseinrichtung des Formwerkzeugunterteils. Vor dem Verfahren des Stempels in den Formraum hinein wird die Folie mittels einer in dem Formraum vorgesehenen Heizeinrichtung beheizt. Die Heizeinrichtung befindet sich während des Beheizens der Folie in einer Heizposition, in der sie einem Verfahren des Stempels in die Formposition entgegensteht. Nach dem Beheizen der Folie wird die Heizeinrichtung, insbesondere mittels einer Heizeinrichtungs-Antriebseinrichtung, aus der Heizposition in eine Verstauposition verfahren. In der Verstauposition gibt die Heizeinrichtung den Formraum für das Verfahren des Stempels in die Formposition frei.

Die Heizeinrichtung kann insbesondere in einer Translationsbewegung oder in einer Schwenkbewegung zwischen der Heizposition und der Verstauposition verfahren werden.

Vorzugsweise wird während des Beheizens der Folie durch die Heizeinrichtung durch Absaugen von Gas aus dem Formraum, insbesondere mittels einer Druckanpassungsvorrichtung, ein Unterdruck in einem von der Folie begrenzten Bereich des Formraums erzeugt, sodass die Folie in Kontakt mit der Heizeinrichtung gesaugt wird.

Weitere optionale Merkmale des Verfahrens ergeben sich aus der oben stehenden Beschreibung der Formstation.

Im Folgenden wir die Erfindung anhand von Ausführungsbeispielen mit Bezug auf die beigefügten Figuren weiter erläutert. Dabei zeigt:
- Fig. 1: in schematischer Schnittansicht eine in den Teilen A, B, C und D dargestellte Abfolge von Betriebszuständen während eines Formprozesses beim Formen einer Mulde in einer Folie mit einer Formstation gemäß einer Ausführungsform,
- Fig. 2: eine schematische Schnittansicht durch eine Formstation gemäß einer weiteren Ausführungsform, und
- Fig. 3: eine schematische Ansicht einer Verpackungsmaschine mit einer Formstation gemäß einer Ausführungsform.

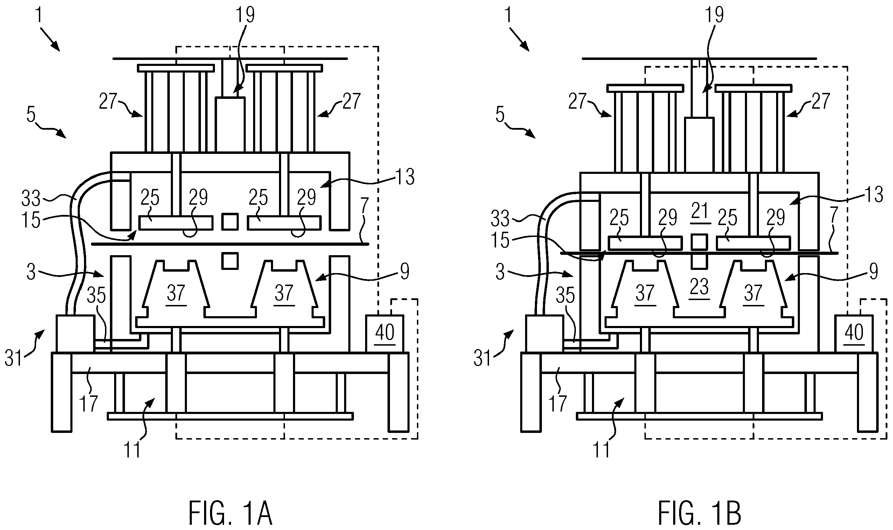

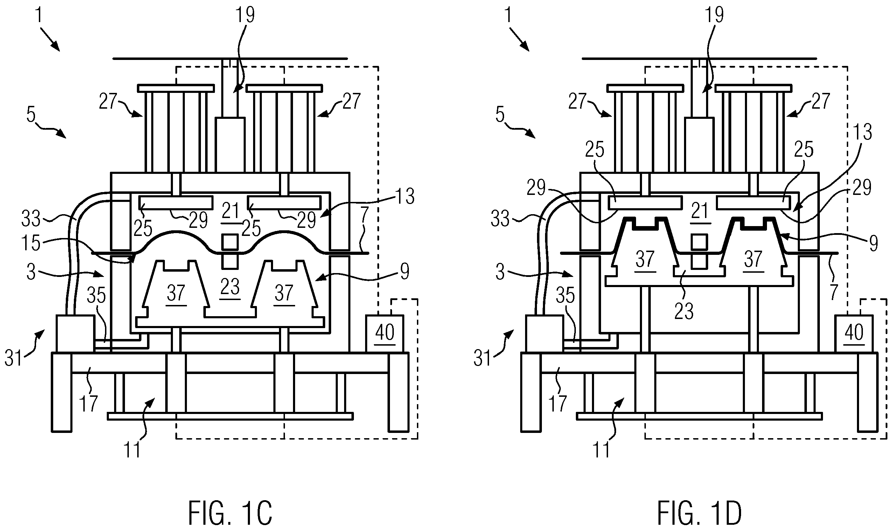

Teil A von Figur 1 zeigt in schematischer Schnittansicht eine Formstation 1 gemäß einer Ausführungsform. Die Formstation 1 umfasst ein Formwerkzeugunterteil 3 und ein Formwerkzeugoberteil 5, welche dazu ausgelegt sind, eine Folie 7 zwischen sich aufzunehmen. In Teil A von Figur 1 ist die Formstation 1 in einem geöffneten Zustand gezeigt. Das heißt, das Formwerkzeugunterteil 3 und das Formwerkzeugoberteil 5 sind entlang der vertikalen Richtung voneinander beabstandet, sodass die Folie 7 zwischen das Formwerkzeugunterteil 3 und das Formwerkzeugoberteil 5 eingebracht werden kann.

Das Formwerkzeugunterteil 3 umfasst einen Stempel 9, welcher mittels einer Stempel-Antriebseinrichtung 11 entlang der vertikalen Richtung verfahren werden kann. Die Stempel-Antriebseinrichtung 11 ist in der gezeigten Ausführungsform als pneumatischer Hubantrieb ausgebildet. Es wären aber auch andere Ausbildungen denkbar, wie z.B. eine elektromotorische Antriebseinrichtung. Das Formwerkzeugoberteil 5 umfasst einen Formraum 13 mit einer nach unten auf das Formwerkzeugunterteil 3 gerichteten Öffnung 15.

Nach einem Verbringen der Folie 7 zwischen das Formwerkzeugunterteil 3 und das Formwerkzeugoberteil 5 wird die Formstation 1 geschlossen, indem das Formwerkzeugunterteil 3 und das Formwerkzeugoberteil 5 relativ zueinander aufeinander zubewegt werden. In der gezeigten Ausführungsform ist das Formwerkzeugunterteil 3 stationär auf einem Maschinengestell 17 angebracht. Das Formwerkzeugoberteil 5 ist mittels einer Hubeinrichtung 19, im gezeigten Fall einer Pneumatikhubeinrichtung, absenkbar über dem Formwerkzeugunterteil 3 angebracht. Es wäre aber auch denkbar, dass das Formwerkzeugoberteil 5 stationär angebracht ist und das Formwerkzeugunterteil 3 anhebbar ist. Auch eine Anhebbarkeit bzw. Absenkbarkeit sowohl des Formwerkzeugunterteils 3 als auch des Formwerkzeugoberteils 5 wäre denkbar.

Teil B von Figur 1 zeigt die Formstation 1 in dem geschlossenen Zustand nach Absenken des Formwerkzeugoberteils 5. Bei geschlossener Formstation 1 bilden das Formwerkzeugunterteil 3 und das Formwerkzeugoberteil 5 zusammen mit der zwischen ihnen liegenden Folie 7 einen luftdicht abgeschlossenen Innenraum. Dieser wird von der Folie 7 in einen oberen Teilraum 21 und einen unteren Teilraum 23 unterteilt.

Um die Folie 7 in einen Zustand guter Verformbarkeit zu verbringen, sind in dem Formraum 13 des Formwerkzeugoberteils 5 Heizeinrichtungen 25 vorgesehen, welche insbesondere als elektrisch beheizbare Heizplatten ausgebildet sein können. In der dargestellten Ausführungsform sind zwei zueinander analog ausgebildete Heizeinrichtungen 25 vorgesehen. Es wäre aber auch denkbar, dass lediglich eine Heizeinrichtung 25 oder mehr als zwei Heizeinrichtungen 25 vorliegen. Die Heizeinrichtungen 25 sind jeweils mittels einer Heizeinrichtungs-Antriebseinrichtung 27 des Formwerkzeugoberteils 5 in dem Formraum 13 zwischen einer Heizposition und einer Verstauposition verfahrbar. In der in Figur 1 gezeigten Ausführungsform sind die Heizeinrichtungs-Antriebseinrichtungen 27 als Hub-/Senkeinrichtungen ausgebildet, mittels derer die Heizeinrichtungen 25 in vertikaler Richtung in einer Translationsbewegung zwischen der Heizposition und der Verstauposition verfahrbar sind. Die Heizeinrichtungs-Antriebseinrichtungen 27 können beispielsweise als Pneumatikantriebe oder elektromotorische Antriebe ausgebildet sein. Die Teile A und B von Figur 1 zeigen die Heizeinrichtungen 25 in der Heizposition und die Teile C und D von Figur 1 zeigen die Heizeinrichtungen 25 in der Verstauposition.

Nach dem Schließen der Formstation 1 befinden sich die Heizeinrichtungen 25 entweder bereits ohnehin schon in der Heizposition oder werden in diese verfahren. Die resultierende Situation ist in Teil B von Figur 1 dargestellt. Nun wird die Folie 7 mittels der Heizeinrichtungen 25 beheizt, um anschließend gut formbar zu sein. In der Heizposition befinden sich Heizflächen 29 der Heizeinrichtungen 25 zumindest im Wesentlichen auf Höhe der Öffnung 15 des Formraums 13 und liegen somit nahe an der Folie 7.

In der gezeigten Ausführungsform umfasst die Formstation 1 des Weiteren eine Druckanpassungsvorrichtung 31, die jeweils über eine Leitung 33, 35 mit dem oberen Teilraum 21 des Innenraums der Formstation 1 bzw. dem unteren Teilraum 23 des Innenraums der Formstation 1 verbunden ist. Über die Leitungen 33, 35 kann die Druckanpassungsvorrichtung 31 bei geschlossener Formstation 1 eine Druckdifferenz zwischen den beiden durch die Folie 7 voneinander getrennten Teilräume 21, 23 des Innenraums der Formstation 1 anpassen. Vorteilhafterweise wird die Druckdifferenz während des Beheizens der Folie 7 durch die Heizeinrichtungen 25 in der Heizposition derart eingestellt, dass der Druck in dem oberen Teilraum 21 geringer als der Druck in dem unteren Teilraum 23 ist. Dies kann beispielsweise durch Absaugen von Gas durch die Leitung 33 aus dem oberen Teilraum 21 und/oder durch Einbringen von zusätzlichem Gas über die Leitung 35 in den unteren Teilraum 23 erfolgen. Hierdurch kann, wenn erwünscht, erreicht werden, dass sich die Folie 7 an die Heizflächen 29 der Heizeinrichtungen 25 anlegt und somit besonders effizient beheizt werden kann.

Nach dem Beheizen der Folie 7 durch die Heizeinrichtungen 25 werden die Heizeinrichtungen 25 von den Heizeinrichtungs-Antriebseinrichtungen 27 in ihre Verstaupositionen verfahren. Der resultierende Zustand ist in Teil C von Figur 1 gezeigt. In der gezeigten Ausführungsform werden die Heizeinrichtungen 25 aus ihrer Heizposition nach oben weiter in den Formraum 13 hinein in die Verstauposition verfahren. Vorzugsweise wird hierbei der in dem oberen Teilraum 21 des Innenraums der Formstation 1 vorliegende gegenüber dem unteren Teilraum 23 geringere Relativdruck beibehalten, sodass die aufgrund der Erwärmung durch die Heizeinrichtungen 25 verformbare Folie 7 nach oben hin in den Formraum 13 des Formwerkzeugoberteils 5 hinein ausgewölbt wird. Durch ein solches Vorformen wird das nachfolgende Formen der Folie 7 durch den Stempel 9 erleichtert.

Schließlich wird der Stempel 9 mittels der Stempel-Antriebseinrichtung 11 nach oben durch die Öffnung 15 des Formraums 13 in den Formraum des Formwerkzeugoberteils 5 hinein verfahren. Die Endposition des Verfahrens des Stempels 9 nach oben wird als "Formposition" des Stempels 9 bezeichnet und ist in Teil D von Figur 1 dargestellt. In ihrer Heizposition (Teil A und B von Figur 1) wären die Heizeinrichtungen 25 einem Verfahren des Stempels 9 aus seiner Vorhalteposition (Teile A, B und C von Figur 1) in seine Formposition physisch entgegengestanden. In ihrer Verstauposition (Teile C und D von Figur 1) stehen die Heizeinrichtungen 25 dem Verfahren des Stempels 9 nach oben nicht mehr entgegen, sodass der Stempel 9 in seine Formposition (Teil D von Figur 1) verfahren werden kann. Bevorzugterweise sind der Stempel 9 und die Heizeinrichtungen 25 voneinander beabstandet, wenn sich der Stempel 9 in seiner Formposition und die Heizeinrichtungen 25 in ihrer Verstauposition befinden.

Um ein Anlegen der Folie 7 an den Stempel 9 zu erleichtern und damit einen möglichst genau dem Profil des Stempels 9 entsprechenden Formverlauf der in der Folie 7 geformten Mulden zu erhalten, werden die Druckverhältnisse zwischen dem oberen Teilraum 21 und dem unteren Teilraum 23 des Innenraums der Formstation 1 vorzugsweise mittels der Druckanpassvorrichtung 31 angepasst, wenn sich der Stempel 9 in seiner Formposition befindet (dieser Zustand ist in Teil D von Figur 1 dargestellt). Durch Einleiten von Gas über die Leitung 33 in den oberen Teilraum 21 und/oder Absaugen von Gas aus dem unteren Teilraum 23 wird erreicht, dass in dem oberen Teilraum 21 ein größerer Druck vorliegt als in dem unteren Teilraum 23. Dies unterstützt das Anlegen der Folie 7 an den Stempel 9.

In der dargestellten Ausführungsform umfasst der Stempel 9 zwei Formbereiche 37, die jeweils zum Formen einer Mulde in der Folie 7 durch Anlegen der Folie 7 an den Stempel 9 ausgebildet sind. So können mehrere Mulden gleichzeitig hergestellt werden. Es wäre aber auch denkbar, dass der Stempel 9 lediglich einen Formbereich 37 oder mehr als zwei Formbereiche 37 aufweist. Auch das Vorsehen mehrerer Stempel 9 wäre denkbar.

Die Formstation 1 umfasst zudem eine Steuereinrichtung 40, welche dazu konfiguriert ist, die Hubeinrichtung 19, die Stempel-Antriebseinrichtung 11 und die Heizeinrichtungs-Antriebseinrichtungen 27, gegebenenfalls auch die Druckanpassungsvorrichtung 31 geeignet ansteuern.

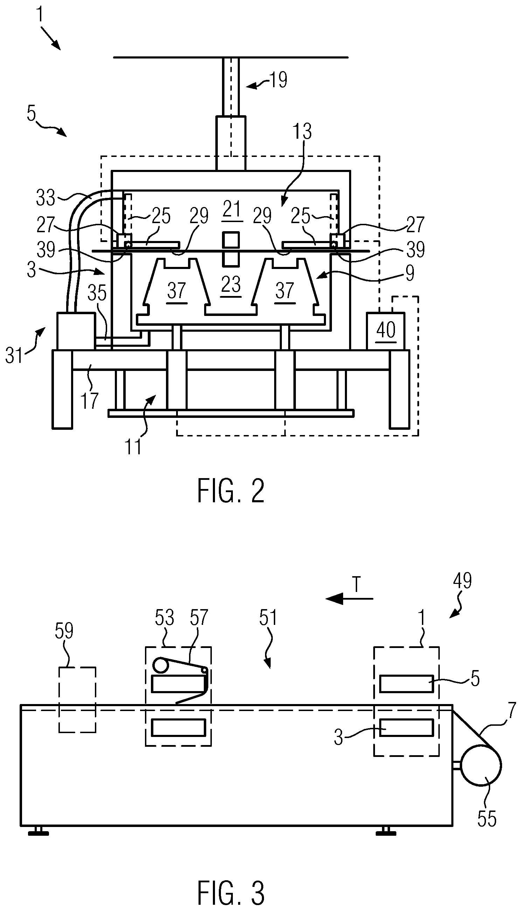

Figur 2 zeigt in schematischer Schnittansicht eine Formstation 1 gemäß einer weiteren Ausführungsform. Diese Formstation 1 unterscheidet sich von der Formstation 1 gemäß der in Figur 1 dargestellten Ausführungsform lediglich dadurch, dass die Heizeinrichtungen 25 in eine anders geartete Verstauposition gebracht werden. Gemäß der in Figur 2 gezeigten Ausführungsform werden die Heizeinrichtungen 25 nicht, wie in der Figur 1 gezeigten Ausführungsform, in Linearbewegungen nach oben in ihre Verstaupositionen verfahren, sondern werden in ihre Verstaupositionen verschwenkt. Die entsprechenden Heizeinrichtungs-Antriebseinrichtungen 27 weisen hierzu Antriebseinrichtungen zum Verschwenken der Heizeinrichtungen 25 um senkrecht zu der Verfahrrichtung des Stempels 9 stehende Achsen 39 auf, welche in der dargestellten Ausführungsform in die Zeichenebene hinein verlaufen. Die Heizeinrichtungen 25 sind in Figur 2 in ihrer Heizposition durchgezogen dargestellt. Die zu den durchgezogen dargestellten Heizeinrichtungen 25 aus Figur 2 korrespondierende Betriebssituation entspricht der in Teil B von Figur 1 dargestellten Betriebssituation. Die Heizeinrichtungen 25 sind zudem in Figur 2 in ihrer Verstauposition mit gestrichelten Linien dargestellt. Die Darstellung mit den Heizelement 25 in gestrichelten Linien aus Figur 2 korrespondiert zu der in Teil C von Figur 1 dargestellten Betriebssituation.

Fig. 3 zeigt eine Verpackungsmaschine 49 mit einer Formstation 1 gemäß einer Ausführungsform als bevorzugte Anwendung der Formstation 1. Bei der Verpackungsmaschine 49 kann es sich beispieslweise um eine Lebensmittelverpackungsmaschine handeln. Außer der Formstation 1 kann die Verpackungsmaschine 49 beispielsweise noch eine Einlegestrecke 51 zum Einlegen von zu verpackenden Produkten und eine Siegelstation 53 zum Verschließen von befüllten Verpackungen umfassen. Eine Folienbahn 7 wird von einer Vorratsrolle 55 abgezogen und entlang einer Transportrichtung T der Verpackungsmaschine 49 zunachst zu der Formstation 1, dann zu der Einlegestrecke 51 und schließlich zu der Siegelstation 53 gefördert. In der Formstation 1 können bei geeigneter Wahl der Form des Stempels 9 als Verpackungsmulden ausgebildete Mulden in der Folie 7 ausgebildet werden. Die Verpackungsmulden werden dann im Bereich der Einlegestrecke 51 mit zu verpackenden Produkten befüllt. Mittels der Siegelstation 53 können die befüllten Verpackungsmulden anschließend durch Ansiegeln einer Oberfolie 57 verschlossen werden. Der Siegelstation 53 nachgeordnet kann die Verpackungsmaschine 50 zudem eine Schneidstation 59 zum Trennen der einzelnen Verpackungen aus dem Folienverbund umfassen.

In der in Fig. 3 dargestellten Version ist die Formstation 1 in der Verpackungsmaschine 49 zum Formen der Verpackungsmulden in der Folienbahn 7 vorgesehen. Es wäre aber beispielsweise auch denkbar, dass zusätzlich oder alternativ eine erfindungsgemäße Formstation 1 zum Formen von Mulden in der Oberfolie 57 vorgesehen ist. Hierdurch könnte bei geeigneter Wahl der Form des Stempels 9 ein Vorformen der Oberfolie 57 vor dem Ansiegeln an die Folienbahn 7 erfolgen, um beispielsweise Verpackungen mit besonderer Formgebung herstellen zu können.

## Patentansprüche

1. Formstation (1) zum Formen einer Mulde in einer Folie (7), wobei
die Formstation ein Formwerkzeugunterteil (3) mit einem Stempel (9) und ein Formwerkzeugoberteil (5) mit einem Formraum (13) umfasst, welche dazu ausgelegt sind, die Folie (7) zwischen sich aufzunehmen, und
das Formwerkzeugunterteil (3) eine Stempel-Antriebseinrichtung (11) umfasst, welche dazu ausgelegt ist, den Stempel (9) während eines Formvorgangs durch eine Öffnung (15) des Formraums (13) in den Formraum (13) des Formwerkzeugoberteils (5) bis in eine Formposition als Endposition zu verfahren,
**dadurch gekennzeichnet, dass**
das Formwerkzeugoberteil (5) eine in dem Formraum (13) vorgesehene Heizeinrichtung (25) zum Beheizen der Folie (7) umfasst, und
das Formwerkzeugoberteil (5) zudem eine Heizeinrichtungs-Antriebseinrichtung (27) umfasst, welche dazu ausgelegt ist, die Heizeinrichtung (25) in dem Formraum (13) zwischen einer Heizposition, in der die Heizeinrichtung (25) einem Verfahren des Stempels (9) in die Formposition entgegensteht, und einer Verstauposition zu verfahren, in der die Heizeinrichtung (25) den Formraum (13) für das Verfahren des Stempels (9) in die Formposition freigibt.

2. Formstation nach Anspruch 1, wobei in der Heizposition der Heizeinrichtung (25) eine Heizfläche (29) der Heizeinrichtung (25) zumindest im Wesentlichen auf Höhe der Öffnung (15) des Formraums (13) liegt.

3. Formstation nach Anspruch 1 oder 2, welche zudem eine Steuereinrichtung (40) umfasst, die dazu konfiguriert ist, bei einem Formvorgang die Heizeinrichtung (25) durch Ansteuern der Heizeinrichtungs-Antriebseinrichtung (27) zunächst zum Beheizen der Folie (7) in die Heizstellung zu verfahren, nach dem Beheizen der Folie (7) die Heizeinrichtung (25) durch Ansteuern der Heizeinrichtungs-Antriebseinrichtung (27) in die Verstauposition zu verfahren, und anschließend den Stempel (9) durch Ansteuern der Stempel-Antriebseinrichtung (11) in die Formposition zu verfahren.

4. Formstation nach einem der vorangehenden Ansprüche, wobei in der Formposition des Stempels (9) und in der Verstauposition der Heizeinrichtung (25) der Stempel (9) und die Heizeinrichtung (25) voneinander beabstandet sind.

5. Formstation nach einem der vorangehenden Ansprüche, wobei die Heizeinrichtung (25) als elektrisch beheizbare Heizplatte ausgebildet ist.

6. Formstation nach einem der vorangehenden Ansprüche, wobei die Heizeinrichtungs-Antriebseinrichtung (27) dazu konfiguriert ist, die Heizeinrichtung (25) in einer insbesondere linear gerichteten Translationsbewegung zwischen der Heizposition und der Verstauposition zu verfahren, oder dazu konfiguriert ist, die Heizeinrichtung (25) in einer Schwenkbewegung zwischen der Heizposition und der Verstauposition zu verfahren.

7. Formstation nach einem der vorangehenden Ansprüche, wobei die Formstation (1) schließbar ist, wobei bei geschlossener Formstation (1) das Formwerkzeugunterteil (3) und das Formwerkzeugoberteil (5) zusammen mit der zwischen ihnen liegenden Folie (7) einen luftdicht abgeschlossenen Innenraum definieren, der zumindest teilweise von dem Formraum (13) des Formwerkzeugoberteils (5) gebildet ist.

8. Formstation nach einem der vorangehenden Ansprüche, welche zudem eine Druckanpassungsvorrichtung (31) umfasst, die dazu ausgelegt ist, durch Absaugen von Gas aus dem Formraum (13) einen Unterdruck in einem von der Folie (7) begrenzten Bereich des Formraums (13) zu erzeugen.

9. Formstation nach Anspruch 7, welche zudem eine Druckanpassungsvorrichtung (31) umfasst, die dazu ausgelegt ist, bei geschlossener Formstation (1) eine Druckdifferenz zwischen den beiden durch die Folie (7) voneinander getrennten Teilräumen (21, 23) des Innenraums der Formstation (1) geeignet anzupassen.

10. Verpackungsmaschine (49) mit einer Formstation (1) nach einem der vorangehenden Ansprüche, wobei die Verpackungsmaschine (49) zudem eine Einlegestrecke (51) zum Einlegen von zu verpackenden Produkten und eine Siegelstation (53) zum Verschließen von befüllten Verpackungen umfasst.

11. Verfahren zum Formen einer Mulde in einer Folie (7), umfassend
Verbringen der Folie (7) zwischen ein Formwerkzeugunterteilteil (3) und ein Formwerkzeugoberteil (5) einer Formstation (1), und
Verfahren eines Stempels (9) des Formwerkzeugunterteilteils (3) durch eine Öffnung (15) eines Formraums (13) des Formwerkzeugoberteils (5) in den Formraum (13) hinein bis in eine Formposition als Endposition,
**dadurch gekennzeichnet, dass**
die Folie (7) vor dem Verfahren des Stempels (9) in den Formraum (13) hinein mittels einer in dem Formraum (13) vorgesehenen Heizeinrichtung (25) beheizt wird, wobei sich die Heizeinrichtung (25) während des Beheizens in einer Heizposition befindet, in der die Heizeinrichtung (25) einem Verfahren des Stempels (9) in die Formposition entgegensteht, und
die Heizeinrichtung (25) nach dem Beheizen aus der Heizposition in eine Verstauposition verfahren wird, in der die Heizeinrichtung (25) den Formraum (13) für das Verfahren des Stempels (9) in die Formposition freigibt.

12. Verfahren nach Anspruch 11, wobei in der Heizposition der Heizeinrichtung (25) eine Heizfläche (29) der Heizeinrichtung (25) zumindest im Wesentlichen auf Höhe der Öffnung (15) des Formraums (13) liegt.

13. Verfahren nach Anspruch 11 oder 12, wobei in der Formposition des Stempels (9) und in der Verstauposition der Heizeinrichtung (25) der Stempel (9) und die Heizeinrichtung (25) voneinander beabstandet sind.

14. Verfahren nach einem der Ansprüche 11 bis 13, wobei die Formstation (1) nach dem Verbringen der Folie (7) zwischen das Formwerkzeugunterteil (3) und das Formwerkzeugoberteil (5) geschlossen wird, so dass das Formwerkzeugunterteil (3) und das Formwerkzeugoberteil (5) zusammen mit der zwischen ihnen liegenden Folie (7) einen luftdicht abgeschlossenen Innenraum definieren, der zumindest teilweise von dem Formraum (13) des Formwerkzeugoberteils (5) gebildet wird.

15. Verfahren nach einem der Ansprüche 11 bis 14, wobei während des Beheizens durch Absaugen von Gas aus dem Formraum (13) ein Unterdruck in einem von der Folie (7) begrenzten Bereich des Formraums (13) erzeugt wird, so dass die Folie (7) in Kontakt mit der Heizeinrichtung (25) gesaugt wird.
